# EUROPEAN PATENT SPECIFICATION

(11) **EP 0 595 267 B1**
(45) Date of publication and mention of the grant of the patent: **16.07.1997**
(21) Application number: 93117349.6
(22) Date of filing: 26.10.1993
(51) Int. Cl.: B60Q 1/076, B60Q 1/06, B60Q 1/14

(54) **Headlight for motor vehicles**
Scheinwerfer für Fahrzeuge
Phare pour véhicules

(30) Priority: 27.10.1992 IT TO920867
(43) Date of publication of application: 04.05.1994
(73) Proprietor: MAGNETI MARELLI S.p.A., 20145 Milano (IT)
(72) Inventor: Ressia, Alessio, I-10073 Cirie' (IT)
(74) Representative: Cerbaro, Elena

(56) References cited:
- FR-A- 1 573 024
- US-A- 3 953 726

## Description

The present invention relates to a headlight for motor vehicles.

In motor vehicles, in order to produce dipped and main-beam lights, two pairs of headlights are normally provided, each headlight being fitted with its own incandescent lamp, for example a halogen lamp, having its own reflector. In particular, one of the two lamps of each pair (forming the light source for the dipped lights) has two filaments and is disposed in a more outward position (with respect to the vehicle) than the lamp forming the light source for the main-beam light, which has a single filament.

In the known system described, the lateral dimension of each pair of headlights is considerable. In an attempt to reduce this dimension, suitable surfaces of reflectors and lenses (which cover the front of the headlights), of smaller size, have been designed. Such headlights require the use of lamps with single filaments. However, even this solution does not enable the dimensions of the headlights to be reduced below a certain value if the requisite photometric values are to be maintained. Other solutions require the use of only two headlights, each being fitted with two light sources which are switched on simultaneously for main-beam operation; the switching on of one specific light source gives dipped operation. Even in this case, however, in order to obtain the requisite photometric values, the reflector has to be of considerable dimensions.

The object of the present invention is to provide a headlight for motor vehicles having reduced overall dimensions with respect to the present values.

The present invention provides a headlight for motor vehicles comprising a reflector, a lamp housed in the said reflector, and means of controlling the said lamp for the selective generation of a main light beam and a dipped light beam, characterised in that the said lamp is single and comprises only one light source, and in that the said control means comprise actuating means capable of moving the said lamp between a first operating position in which the said light source generates the said dipped light beam, and a second operating position in which the said light source generates the said main light beam.

To enable the present invention to be more clearly understood, some preferred embodiments will now be described, purely as non-restrictive examples, with reference to the attached drawings, in which
Figure 1 is a transverse vertical section of a first embodiment of a headlight according to the invention in a first operating position;
Figure 2 shows the same section as that in Figure 1, with the headlight in a second operating position;
Figure 3 is an exploded perspective view of the headlight in Figure 1;
Figure 4 shows a detail of the assembly of the headlight according to the invention;
Figure 5 is an exploded perspective view of a variant of the headlight according to the invention;
Figure 6 is a perspective view of another variant of the headlight according to the invention;
Figure 7 is a vertical transverse section of the headlight in Figure 6;
Figure 8 is a perspective view of a further embodiment of the headlight according to the invention; and
Figure 9 is an enlarged side view of a detail of the headlight according to Figure 8.

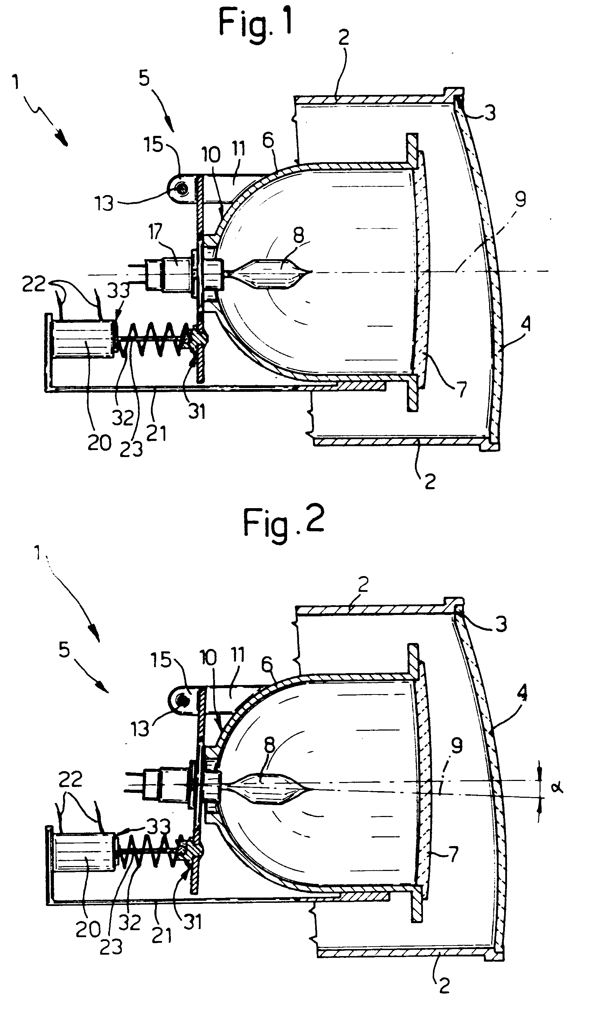

With reference to Figures 1 and 2, these show a headlight 1, comprising, in summary, an external cup-shaped casing 2 (shown only in part) providing a front aperture 3 covered by a transparent element 4. The casing 2 houses a light assembly 5 comprising a single reflector 6 with a suitably designed surface which, in the example shown, is covered frontally by a lens 7, also suitably designed. The light assembly 5 is fixed to the casing 2 by means which are known and are not shown, which enable the assembly 5 to be adjusted horizontally and vertically.

As shown in Figures 1 and 2, the reflector 6 houses a lamp 8 forming a single light source, particularly of the discharge type, having a considerable luminous intensity. As shown in Figures 1 and 2, the lamp 8 is movable between two terminal positions, namely a first position (shown in Figure 1) in which the axis 9 of the lamp 8 is substantially horizontal and the lamp 8 acts as a dipped light, and a second position (shown in Figure 2) in which the axis 9 is inclined downwards at an angle α and the lamp 8 acts as a main-beam light.

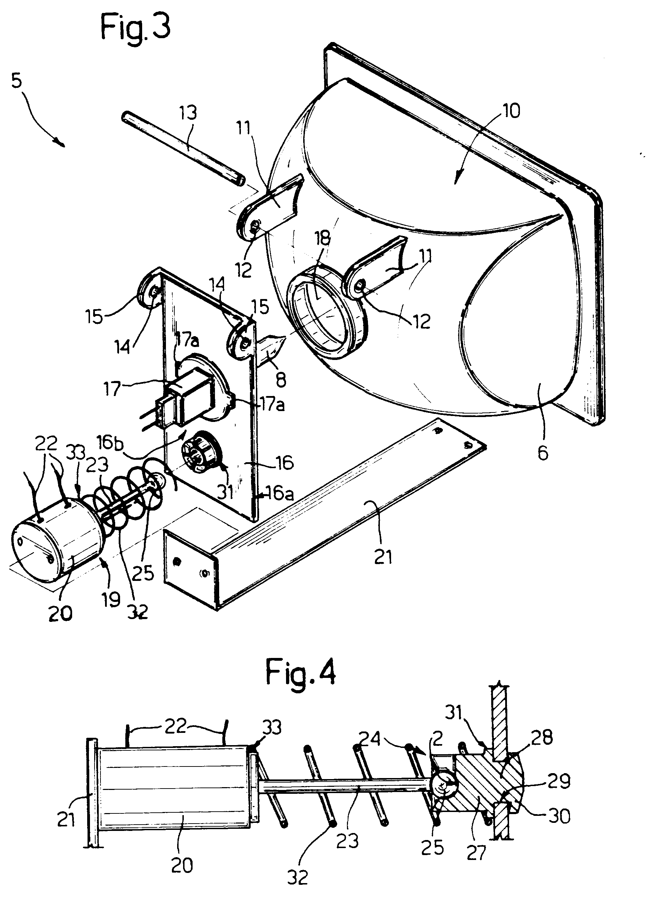

For this purpose (see in particular Figure 3), the outer surface 10 of the reflector 6 has a pair of lugs 11 parallel to each other and disposed a certain distance apart. Each of the lugs 11 is provided with a corresponding hole 12, and the holes 12 are aligned with each other and passed through by a pin 13 which also engages in the holes 14 provided on flat flaps 15 projecting from the two opposite sides of a substantially rectangular supporting plate 16, so that the pin 13 forms a substantially horizontally pivot for the plate 16. In the example shown, the flaps 15 extend in two parallel vertical planes parallel to two vertical sides of the plate 16 and close to the upper edge of the plate 16.

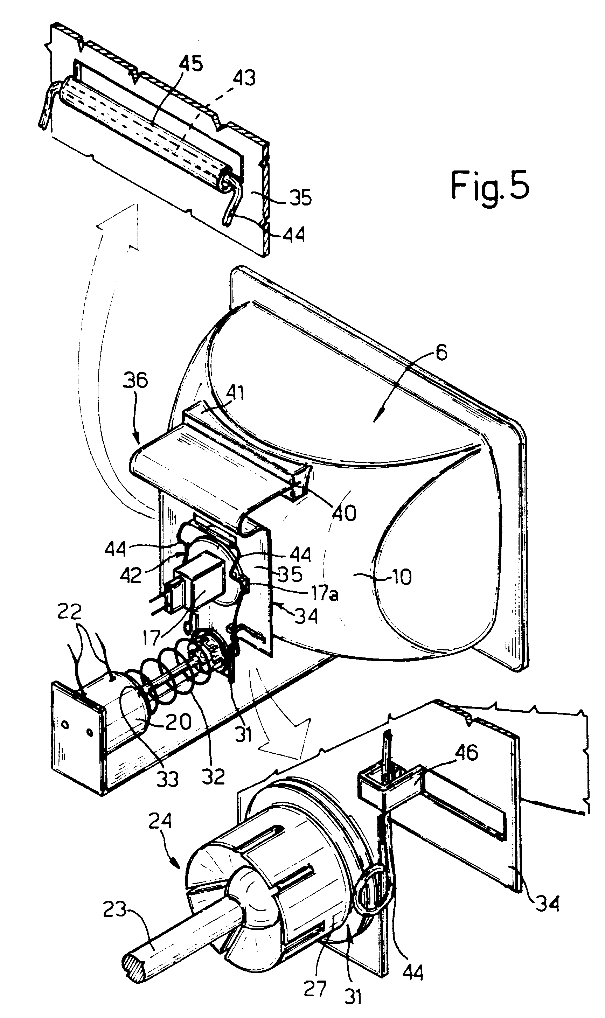

The plate 16, which has two main surfaces, namely 16a facing the reflector and 16b opposite the first, provides a central shaped hole (not illustrated) through which extends a lamp-holder 17 (shown only schematically, since it is known and is not essential for the purposes of the present invention) for the lamp 8. The lamp-holder 17, being integral with the lamp 8, has suitable flanges 17a (also shown schematically) to enable the lamp 8 to be fixed to the plate 16 by means which are not illustrated and which are similar to those for fixing to the reflector used in conventional headlights, particularly those of the elastic type. Two examples of elastic fixing means are illustrated in Figures 5-7 and will be described subsequently with reference to these figures. The reflector 6 has a hole 18 for the passage of the lamp 8, of dimensions such that the lamp 8 can be orientated in the first and second positions mentioned above.

The headlight 1 is also provided with means 19 of controlling the rotation of the lamp 8, which in this case are electromechanical. In detail, these means 19 comprise an electromagnet 20 facing the surface 16b of the plate and integral with a rod 21 carried by the reflector 6. The electromagnet 20, supplied through conductors 22, has a moving core 23 partially projecting from the electromagnet 19 and engaging, through a ball joint 24 (see Figure 3 in particular), with a portion of the plate 16 on the other side of the shaped hole, to which the lamp-holder 17 is fixed, from the flaps 15 (the lower part in the example shown). In detail, the moving core 23 forms a rod whose free end has a ball 25 retained in a spherical cavity 26 of a body 27 having a smaller portion 28 passing through a hole 29 in the plate 16 and terminating in an end portion 30 which is flattened and widened to secure the fixing to the plate 16.

A helical spring 32, one of whose ends bears on the plate 16 at a seat 31 formed by the body 27 and whose other end is fixed in a seat 33 formed in the frame of the electromagnet 20, is wound around the moving core 23. In the example shown, the spring 32 is compressed between the seats 31 and 33.

For assembly, the plate 16 is fixed permanently to the reflector 6 by inserting the pin 13 into the holes 14 of the flaps 15 of the plate 16 and into the holes 12 of the lugs 11 of the reflector 6. The lamp 8 is then inserted into the shaped hole (not shown) in the plate 16 and into the hole 18 in the reflector 6, and is then secured in position by means of elastic elements of conventional type, which are not shown. The moving core 23 of the electromagnet 20 is then inserted in the spherical cavity 26 and the spring 32 is simultaneously compressed between the seats 31 and 33.

Normally, when the headlight 1 is to operate as a dipped light, the electromagnet 20 is not supplied with current and the spring 32 keeps the plate 16 in the position shown in Figure 1. When the headlight 1 is to operate as a main-beam light, the electromagnet 20 is supplied through the conductors 22 and causes the moving core 23 to be withdrawn, which makes the plate 16 rotate about the axis formed by the pin 13 (in the clockwise direction in Figure 1). The plate is then brought into the position shown in Figure 2, in which the axis 9 of the lamp forms an angle α of approximately 1° with respect to the preceding position. To return to operation as a dipped light, the supply to the electromagnet 20 is cut off, so that the electromagnet is no longer energised. Consequently the elastic force of the spring 32, no longer opposed by the electromagnet 20, causes the plate 16 to rotate in the direction opposite to the preceding direction (in the anti-clockwise direction in Figure 2) and the axis 9 of the lamp is returned to the position in Figure 1.

The solution presented is inherently safe, since, if any failures should occur in the electromagnet or in the mechanical parts, or if the electromagnet power supply should fail for any reason, the spring 32 would still return the lamp 8 to the position in Figure 1 (dipped light operation).

Figure 5 shows a variant of the plate 16. In this case, the plate, indicated by 34, itself forms the hinge axis. To be precise, the plate 34, preferably produced as a sheet of spring steel, comprises a first flat portion 35 in which is formed a shaped hole (not visible) for the passage and support of the lamp 8 (of which only the lamp-holder 17 is visible). The flat portion 35 is connected to a basically U-shaped hinging portion 36 disposed transversely with respect to the flat portion 35 and forming an elastic hinge with a horizontal axis. The upper edge of the plate 16 (in its hinging portion 36) is inserted in a notch 40 provided in an extension 41 projecting from the outer surface 10 of the reflector 6. The body 27, connected to the moving core 23 of the electromagnet 20 through the ball joint 24 and the spring 32, in a similar way to that shown in Figures 1 and 2, is fixed to the plate 34 at the lower edge of the plate 34 (opposite the hinging portion 36).

According to the illustration in Figure 5, the elastic means for fixing the lamp 8 (not shown) to the plate 34 consist of a filiform spring 42 bent basically in a U-shape, with a central portion 43 and two arms 44. The central portion 43 is retained by a portion 45 of the sheet forming the plate 34, cut along an open-ended line and bent back to form an elongated hook within which the central portion 43 extends, as shown in the enlarged detail of Figure 5. The arms 44 of the spring 42 are shaped so that they exert an elastic force in the direction of the plate 34 and thus retain the flanges 17a (also shown purely schematically here) of the lamp-holder 17 of the lamp 8 against the plate 34, and are secured at their (lower) free ends by hooks 46 formed in the flat portion 35 of the plate 34 on opposite sides of the shaped hole (not visible) through which the lamp-holder 17 passes. The hooks 46 are also preferably formed by cutting along a line which is not closed and bending back a corresponding portion of the sheet material of the plate 34, as shown in another enlarged detail of Figure 5.

In this embodiment also, the orientation of the plate 34 and consequently the movement of the axis 9 of the lamp 8 are controlled by the electromagnet 20 and by the spring 32, with the sole difference that in this case the rotation of the plate 34 takes place about the elastic hinge 36. In this embodiment, however, the spring 32 could also be absent and the function of returning the plate 34 to the dipped position could be performed by the elastic hinge 36 itself.

This variant is characterised by its extreme structural simplicity and consequently by low manufacturing costs and high reliability.

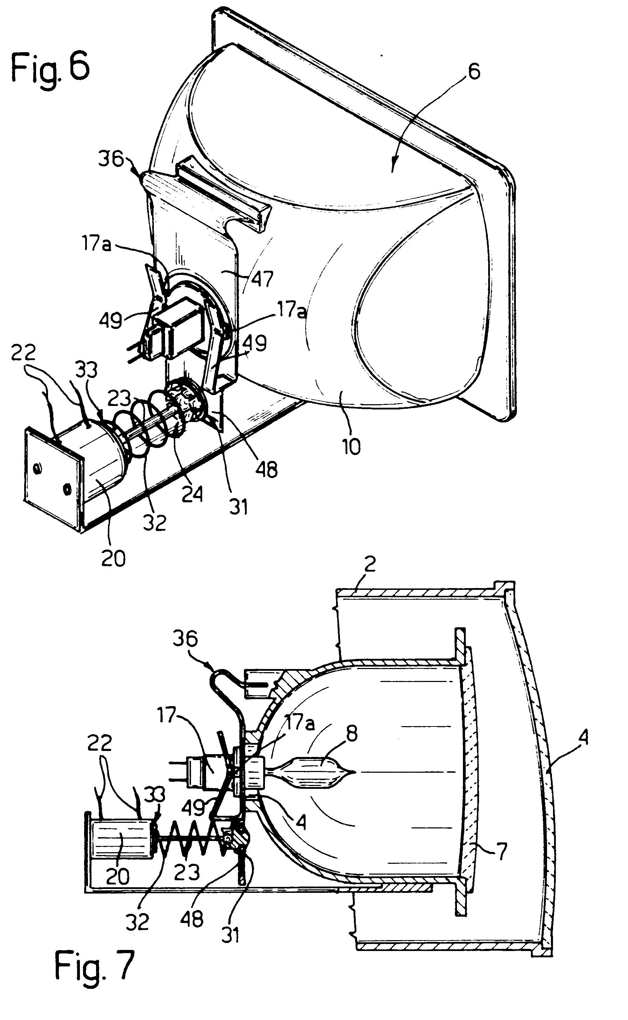

In the variant illustrated in Figures 6 and 7, the plate, indicated by 47, is again articulated to the outer surface 10 of the reflector 6 by the elastic hinge 36, as in Figure 5, but the elastic means for retaining the lamp 8 are formed by the plate 47 itself. In detail, two parallel vertical incisions are made in the lower portion of the plate 47, opposite the elastic hinge 36, beginning at the lower edge through a certain part of the plate 47, in such a way that a central area 48, to which the body 27 is fixed, is separated from two lateral strips 49. The lateral strips 49 are bent so that they form, in a side view, a kind of "V" whose vertex is elastically pressed towards the plate 47 in such a way as to elastically retain the flanges 17a of the lamp-holder 17.

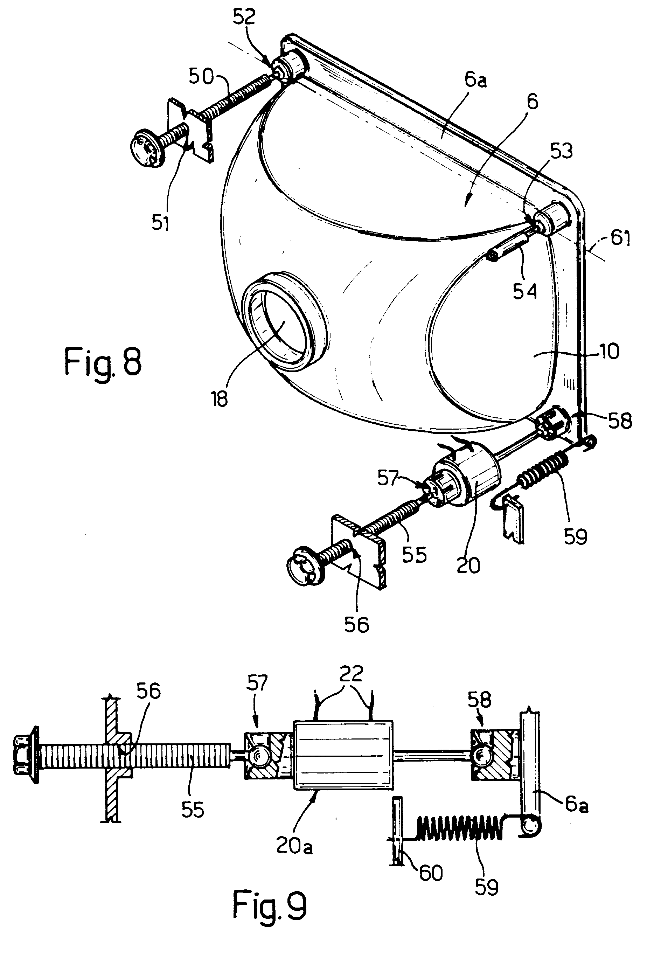

In the headlight shown in Figures 8 and 9, however, the lamp (not shown) is fixed in a known way integrally with the reflector 6, and the entire reflector 6 is supported so that it can rotate about a horizontal axis to move the light beam from the dipped to the main position.

In detail, the reflector, having a peripheral frame 6a, is provided with means of horizontal adjustment of a known type, shown schematically in the figure as a threaded rod 50 engaged in a female thread 51 integral with the casing 2 (not shown in Figures 8 and 9) of the headlight 1. One end of the threaded rod 50 is fixed to an upper corner of the peripheral frame 6a by a ball joint 52. The opposite upper corner, forming a fixed point, is connected to the casing 2 by a ball joint 53 and a rod 54 in a known way, to enable the reflector to be adjusted and orientated. The lower corner, in a position below the fixed point formed by the ball joint 53, is connected to the vertical adjustment system, which is of a known type, through the electromagnet 20 to permit orientation of the reflector and consequently of the light beam. As shown in Figures 8 and 9, the vertical adjustment system comprises a threaded rod 55 engaged in a female thread 56 connected integrally to the outer casing 2 of the headlight. The end of the threaded rod 55, facing the peripheral frame 6a, is connected through a ball joint 57 to the rear surface of the casing 20a of the electromagnet 20 whose moving core 23 is connected through a ball joint 58 to the lower corner of the frame 6a, as shown in detail in Figure 9. In practice, the electromagnet 20 is interposed between the vertical adjustment system and the frame 6a of the reflector. Finally, a spring 59 is stretched between the frame 6a of the reflector 6 and a projection 60 integral with the casing 2 (not shown) of the headlight 1, to ensure that the reflector 6 returns to the dipped position if the electromagnet fails.

In this embodiment, when the electromagnet 20 is supplied with current, the moving core 23 is brought to and kept in the outward position, and pushes the whole reflector 6 into the position of operation as a main-beam light. Conversely, when the supply to the electromagnet 20 is cut off, the spring 59 pulls the lower corner of the frame 6a of the reflector towards the projection 60, causing the reflector 6 to rotate about a theoretical axis 61 passing through the upper joints 52 and 53 (both forming fixed points at this stage) and causing the moving core 23 to move backwards. Consequently, in this case the reflector (and therefore its optical axis) is rotated between the position corresponding to operation as a main-beam light and a position inclined downwards (corresponding to operation as a dipped light); additionally, in this case, the lamp 8 is rotated integrally with the reflector 6.

To carry out the vertical adjustment of the headlight, the headlight is first brought into the dipped position, and the correct vertical position is set by turning the threaded rod 55. The horizontal adjustment is carried out in a similar way by turning the screw 50.

In this case also, the presence of the spring 59 ensures that the headlight 1 is automatically brought into the dipped position if the electromagnet fails.

The advantages which may be obtained with the headlight according to the invention are as follows. In the first place, it is possible to provide the functions of both a main-beam light and a dipped light with a single headlight and a single reflector. This enables the overall dimensions of the headlight to be reduced to a minimum, while providing a simple transfer from one type of operation to the other. Moreover, this transfer is not accompanied by moments of darkness which may occur in headlights with double filaments.

The headlight may also be fitted to existing motor vehicles, without the need for major modifications to the vehicles.

Finally, the manufacturing and assembly costs are reduced considerably owing to the presence of a single headlight and the simplicity of the mechanical and electrical solutions for movement and control.

Lastly, it is clear that numerous modifications and variations within the scope of the appended claims may be made to the headlight described and illustrated herein. In particular, it is emphasised that the actuator which controls the movement of the lamp alone or of the lamp combined with the reflector may be made in any way suitable to the specific application, that the return spring which returns the lamp to the dipped position may also be replaced by other elements or may be incorporated directly within the electromagnet 20, and that the functions of the electromagnet and of the spring may be interchanged, provided that a safety device is retained so that, in the case of failure of one of the components, and specifically of the electromagnet, the headlight will be returned to the condition of dipped operation.

It is also emphasised that the examples illustrated are for information only and that countless other solutions for transferring the headlight from dipped to main-beam operation, either by relative movement of the lamp with respect to the reflector or vice-versa, or by movement of the whole headlight, fall within the scope of the appended claims.

## Claims

1. Headlight (1) for motor vehicles, comprising a reflector (6), a lamp (8) housed in the said reflector, and means (16; 34; 47, 19, 32) of controlling the said lamp for the selective generation of a main light beam and of a dipped light beam, characterised in that the said lamp (8) is single and comprises only one light source, and in that the said control means (16; 34; 47, 19, 32) comprise actuating means capable of moving the said lamp (8) between a first operating position in which the said light source generates the said dipped light beam, and a second operating position in which the said light source generates the said main light beam.

2. Headlight according to Claim 1, in which the said light source has an axis (9), characterised in that the said actuating means (16; 34; 47, 19, 32) comprise means of causing inclination, capable of causing angular inclination of the said axis (9) into the said first and the said second operating positions of the said lamp (8).

3. Headlight according to Claim 2, characterised in that the said control means (16; 34; 47, 19, 32) comprise means capable of causing the said lamp (8) to rotate with respect to the said reflector (6).

4. Headlight according to Claim 3, characterised in that the said control means (16; 34; 47, 19, 32) comprise a plate (16; 34; 47) supporting the said lamp (8), the said plate being articulated to the said reflector (6) so that it rotates about a substantially horizontal axis (13; 36), and an actuator (19) acting on the said plate (16; 34; 47) in such a way as to control its rotation between a first and a second terminal position corresponding to the said first and second operating positions of the said lamp (8).

5. Headlight according to Claim 4, characterised in that the said actuator (19) comprises an electromagnet (20) having a moving core (23) fixed at a free end to the said plate (16; 34; 47), the said electromagnet (20), when supplied with current, being capable of bringing the said plate (16; 34; 47) into the said second terminal position, and an opposing spring (32) generating a resetting force to return the said plate to the said first terminal position in the absence of a supply to the said electromagnet.

6. Headlight according to Claim 4 or 5, characterised in that the said plate (16; 34; 47) has means (42; 49) supporting the said lamp (8) in a central portion thereof, means (13-15; 36) of articulation to the said reflector (6) near a first edge of the reflector, and means (24-30) of connection to the said actuator (19) near a second edge opposite the said first edge, the said connection means comprising a ball joint (24).

7. Headlight according to Claim 6, characterised in that the said means of articulation comprise a pin (13) supported by the said reflector (6) and engaged in a pair of holes (14) made in extensions (15) of the said plate (16).

8. Headlight according to Claim 6, characterised in that the said plate (34; 47) consists of a metal sheet having a bent portion (36) forming an elastic hinge, the said bent portion (36) being fixed to the said reflector (6) at one of the corners of the reflector.

9. Headlight according to any of Claims 4 to 8, characterised in that it comprises elastic supporting means (42; 49) for the said lamp (8) carried by the said plate (34; 47).

10. Headlight according to Claim 9, characterised in that the said plate (34) consists of a metal sheet and in that the said elastic supporting means comprise a filiform spring (42) bent into a U-shape, having a central portion (43) and two arms (44) capable of pressing elastically on the said plate (34), the said sheet having a cut and bent flap surrounding the said central portion (43) of the said filiform spring (42) and a pair of hook-shaped elements (46) to retain the said arms (44), the said hook-shaped elements (46) being formed from a corresponding cut and bent portion of sheet.

11. Headlight according to Claim 9, characterised in that the said plate (47) consists of a metal sheet having two portions (49) cut longitudinally and bent back so that they are capable of pressing elastically on the plate.

12. Headlight according to Claim 2, characterised in that the said control means (19, 32) comprise means capable of causing the said reflector (6) to rotate together with the said lamp (8) with respect to an outer casing (2) of the said headlight (1).

13. Headlight according to Claim 12, characterised in that the said control means comprise an actuator (19) acting on the said reflector (6) in such a way as to cause it to rotate between a first and a second terminal position corresponding to the said first and second operating positions of the said lamp (8).

14. Headlight according to Claim 13, characterised in that the said actuator (19) comprises an electromagnet (20) having a moving core (23) fixed at a free end to a corner of the frame (6a) of the said reflector (6), the said electromagnet (20), when supplied with current, being capable of bringing the said reflector into the said second terminal position, and an opposing spring (32) generating a resetting force to return the said reflector (6) to the said first terminal position in the absence of a supply to the said electromagnet.

15. Headlight according to Claim 14, characterised in that the said electromagnet (20) is interposed between the said reflector (6) and means (55, 56) of vertical adjustment of the said reflector (6), ball joints (57) being interposed between the said means of vertical adjustment (55, 56) and the said electromagnet (20), as well as between the said electromagnet and the said reflector (6).

## Patentansprüche

1. Frontscheinwerfer (1) für Kraftfahrzeuge, umfassend einen Reflektor (6), eine in dem Reflektor untergebrachte Lampe (8) und Mittel (16; 34; 47, 19, 32) zum Steuern der Lampe für das selektive Erzeugen eines Hauptlichtstrahls und eines gedämpften Lichtstrahls, **dadurch gekennzeichnet**, daß die Lampe (8) eine einzige ist und nur eine Lichtquelle umfaßt, und daß die Steuermittel (16; 34; 47, 19, 32) Betätigungsmittel umfassen, die in der Lage sind, die Lampe (8) zwischen einer ersten Betriebsposition, in welcher die Lichtquelle den gedämpften Lichtstrahl erzeugt, und einer zweiten Betriebsposition, in welcher die Lichtquelle den Hauptlichtstrahl erzeugt, zu verlagern.

2. Frontscheinwerfer nach Anspruch 1, in welchem die Lichtquelle eine Achse (9) aufweist, dadurch gekennzeichnet, daß die Betätigungsmittel (16; 34; 47, 19, 32) Mittel umfassen für die Verursachung einer Neigung, die in Lage sind, eine Winkelneigung der Achse (9) in die erste und die zweite Betriebsposition der Lampe (8) zu bewirken.

3. Frontscheinwerfer nach Anspruch 2, dadurch gekennzeichnet, daß die Steuermittel (16; 34; 47, 19, 32) Mittel umfassen, die in der Lage sind, die Lampe (8) relativ zum Reflektor (6) zu verschwenken.

4. Frontscheinwerfer nach Anspruch 3, dadurch gekennzeichnet, daß die Steuermittel (16; 34; 47, 19, 32) eine Platte (16; 34; 47) die die Lampe (8) trägt, wobei die Platte an den Reflektor (6) derart angelenkt ist, daß sie um eine im wesentlichen horizontale Achse (13; 36) schwenkt, und ein Betätigungsglied (19), das auf die Platte (16; 34; 47) in solcher Weise einwirkt, daß die Schwenkbewegung zwischen einer ersten und einer zweiten Endposition gesteuert wird, welche der ersten und der zweiten Betriebsposition der Lampe (8) entsprechen, umfassen.

5. Frontscheinwerfer nach Anspruch 4, dadurch gekennzeichnet, daß das Betätigungsglied (19) einen Elektromagneten (20) mit einem beweglichen Anker (23), der an einem freien Ende mit der Platte (16; 34; 47) befestigt ist, wobei der Elektromagnet (20), wenn er mit Strom versorgt wird, in der Lage ist, die Platte (16; 34; 47) in die zweite Endposition zu verlagern, und eine Rückstellfeder (32) für die Erzeugung einer Rückstellkraft, um die Platte in die erste Endposition bei Abwesenheit einer Versorgung des Elektromagneten zurückkehren zu lassen, umfaßt.

6. Frontscheinwerfer nach Anspruch 4 oder 5, dadurch gekennzeichnet, daß die Platte (16; 34; 47) Mittel (42; 49) zum Abstützen der Lampe (8) in einer zentralen Position derselben, Mittel (13-15; 36) zum Anlenken an den Reflektor (6) nahe einer ersten Kante des Reflektors und Mittel (24-30) zum Verbinden mit dem Betätigungsglied (19) nahe einer zweiten Kante, welche der ersten Kante abgewandt ist, aufweist, wobei die Verbindungsmittel ein Kugelgelenk (24) umfassen.

7. Frontscheinwerfer nach Anspruch 6, dadurch gekennzeichnet, daß die Gelenkmittel einen Stift (13) umfassen, der durch den Reflektor (6) getragen wird und in einem Lochpaar (14) in Vorsprüngen (15) der Platte (16) in Eingriff steht.

8. Frontscheinwerfer nach Anspruch 6, dadurch gekennzeichnet, daß die Platte (34; 47) aus einem Blech besteht mit einem gebogenen Abschnitt (36), der ein elastisches Gelenk bildet, wobei der gebogene Abschnitt (36) an den Reflektor (6) an einer der Ecken des Reflektors befestigt ist.

9. Frontscheinwerfer nach einem der Ansprüche 4 bis 8, dadurch gekennzeichnet, daß er elastische Abstützmittel (42; 49) für die durch die Platte (34; 47) getragene Lampe (8) umfaßt.

10. Frontscheinwerfer nach Anspruch 9, dadurch gekennzeichnet, daß die Platte (34) aus einem Blech besteht und dadurch, daß die elastischen Abstützmittel eine Drahtfeder (42) umfassen, welche U-förmig gebogen ist, mit einem zentralen Abschnitt (43) und zwei Schenkeln (44), welche in der Lage sind, elastisch an die Platte (34) zu drücken, wobei das Blech einen ausgeschnittenen und gebogenen Flügel aufweist, der den zentralen Abschnitt (43) der Drahtfeder (42) und ein Paar von hakenförmigen Elementen (46) umschließt, um die Schenkel (44) zurückzuhalten, wobei die hakenförmigen Elemente (46) aus einem entsprechend ausgeschnittenen und gebogenen Abschnitt des Blechs gebildet sind.

11. Frontscheinwerfer nach Anspruch 9, dadurch gekennzeichnet, daß die Platte (47) aus einem Blech mit zwei Abschnitten (49) besteht, die längs ausgeschnitten und zurückgebogen sind, so daß sie in der Lage sind, elastisch auf die Platte zu drücken.

12. Frontscheinwerfer nach Anspruch 2, dadurch gekennzeichnet, daß die Steuermittel (19, 32) Mittel umfassen, die in der Lage sind, den Reflektor (6) zusammen mit der Lampe (8) in bezug auf ein äußeres Gehäuse (2) des Frontscheinwerfers (1) zur Schwenkung zu veranlassen.

13. Frontscheinwerfer nach Anspruch 12, dadurch gekennzeichnet, daß die Steuermittel ein Betätigungsglied (19) umfassen, das auf den Reflektor (6) derart einwirkt, daß dieser zur Schwenkung zwischen einer ersten und einer zweiten Endposition veranlaßt wird, welche der ersten und der zweiten Betriebsposition der Lampe (8) entsprechen.

14. Frontscheinwerfer nach Anspruch 13, dadurch gekennzeichnet, daß das Betätigungsglied (19) einen Elektromagneten (20) mit einem beweglichen Anker (23), welcher an einem freien Ende mit einer Ecke des Rahmens (6a) des Reflektors (6) befestigt ist, wobei der Elektromagnet (20), wenn er mit Strom versorgt wird, in der Lage ist, den Reflektor in die zweite Endposition zu verbringen, und eine Rückstellfeder (32), die eine Rückstellkraft erzeugt, um in Abwesenheit einer Versorgung des Elektromagneten den Reflektor (6) in die erste Endposition zurückzuverbringen, umfaßt..

15. Frontscheinwerfer nach Anspruch 14, dadurch gekennzeichnet, daß der Elektromagnet (20) zwischen dem Reflektor (6) und Mitteln (55, 56) zum vertikalen Anpassen des Reflektors (6) eingefügt ist, wobei Kugelgelenke (57) zwischen den Mitteln zum vertikalen Anpassen (55, 56) und dem Elektromagneten (20) sowie zwischen dem Elektromagneten und dem Reflektor (6) eingefügt sind.

## Revendications

1. Phare (1) Pour véhicules à moteur, comprenant un réflecteur (6), une lampe (8) logée dans ledit réflecteur, et des moyens (16 ; 34 ; 47, 19, 32) servant à contrôler ladite lampe pour pouvoir produire au choix des feux de pleins phares ou des feux de code, caractérisé en ce que ladite lampe (8) est unique et ne comprend qu'une seule source lumineuse, et en ce que lesdits moyens de contrôle (16 ; 34 ; 47, 19, 32) comprennent des moyens d'actionnement capables de déplacer ladite lampe (8) entre une première position de fonctionnement dans laquelle ladite source lumineuse produit lesdits feux de code, et une seconde position de fonctionnement dans laquelle ladite source lumineuse produit lesdits feux de pleins phares.

2. Phare selon la revendication 1, dans lequel ladite source lumineuse possède un axe (9), caractérisé en ce que lesdits moyens d'actionnement (16 ; 34 ; 47, 19; 32) comprennent des moyens causant l'inclinaison, capables d'amener ledit axe (9) à s'incliner vers ladite première ou vers ladite seconde position de fonctionnement de ladite lampe (8).

3. Phare selon la revendication 2, caractérisé en ce que lesdits moyens de contrôle (16 ; 34 ; 47, 19, 32) comprennent des moyens capables d'amener ladite lampe (8) à tourner par rapport audit réflecteur (6).

4. Phare selon la revendication 3, caractérisé en ce que lesdits moyens de contrôle (16 ; 34 ; 47, 19, 32) comprennent une plaque (16 ; 34 ; 47) soutenant ladite lampe (8), ladite plaque étant articulée sur ledit réflecteur (6) de façon à pouvoir tourner autour d'un axe pratiquement horizontal (13 ; 36), et des moyens d'actionnement (19) agissant sur ladite plaque (16 ; 34 ; 47) de façon à pouvoir contrôler sa rotation entre une première et une seconde positions limites correspondant aux dites première et seconde positions de fonctionnement de ladite lampe (8).

5. Phare selon la revendication 4, caractérisé en ce que lesdits moyens d'actionnement (19) comprennent un électro-aimant (20) ayant un noyau mobile (23) fixé à son extrémité libre à ladite plaque (16 ; 34 ; 47), ledit électro-aimant (20), quand il est alimenté en courant, étant capable d'amener ladite plaque (16; 34 ; 47) dans ladite seconde position limite, et un ressort (32) s'opposant à lui engendrant une force de rappel servant à ramener ladite plaque à ladite première position limite en l'absence d'alimentation en courant du dit électro-aimant.

6. Phare selon la revendication 4 ou 5, caractérisé en ce que ladite plaque (16 ; 34 ; 47) possède des moyens (42 ; 49) soutenant ladite lampe (8) dans une partie centrale de cette plaque, des moyens (13 à 15 ; 36) d'articulation sur ledit réflecteur (6) près d'un premier bord du réflecteur, et des moyens (24 à 30) de connexion aux dits moyens d'actionnement (19) près d'un second bord opposé audit premier bord, lesdits moyens de connexion comprenant un joint à rotule (24).

7. Phare selon la revendication 6, caractérisé en ce que lesdits moyens d'articulation comprennent une broche (13) soutenue par ledit réflecteur (6) et engagée dans une paire de trous (14) pratiqués dans des prolongements (15) de ladite plaque (16).

8. Phare selon la revendication 6, caractérisé en ce que ladite plaque (34 ; 47) consiste en une feuille métallique possédant une partie tordue (36) formant charnière élastique, ladite portion tordue (36) étant fixée audit réflecteur (6) à l'un des coins du réflecteur.

9. Phare selon l'une quelconque des revendications 4 à 8, caractérisé en ce qu'il comprend des moyens de soutien élastiques (42 ; 49) pour ladite lampe (8) portés par ladite plaque (34 ; 47).

10. Phare selon la revendication 9, caractérisé en ce que ladite plaque (34) consiste en une feuille métallique et en ce que lesdits moyens de soutien élastiques comprennent un ressort filiforme (42) tordu en forme de "U", comportant une partie centrale (43) et deux bras (44) capables de presser de façon élastique sur ladite plaque (34), ladite feuille présentant un volet coupé et tordu entourant ladite partie centrale (43) du dit ressort filiforme (42) et une paire d'éléments en forme de crochet (46) servant à maintenir lesdits bras (44), lesdits éléments en forme de crochet (46) étant réalisés à partir d'une partie correspondante, coupée et tordue, de la feuille.

11. Phare selon la revendication 9, caractérisé en ce que ladite plaque (47) consiste en une feuille métallique possédant deux parties (49) coupées longitudinalement et tordues en arrière de façon à pouvoir presser de manière élastique sur la plaque.

12. Phare selon la revendication 2, caractérisé en ce que lesdits moyens de contrôle (19, 32) comprennent des moyens capables d'amener ledit réflecteur (6) à tourner en même temps que ladite lampe (8) par rapport au boîtier externe (2) du dit phare (1).

13. Phare selon la revendication 12, caractérisé en ce que lesdits moyens de contrôle comprennent des moyens d'actionnement (19) agissant sur ledit réflecteur (6) de façon à l'amener à pivoter entre une première et une seconde positions limites correspondant aux dites première et seconde positions de fonctionnement de ladite lampe (8).

14. Phare selon la revendication 13, caractérisé en ce que lesdits moyens d'actionnement (19) comprennent un électro-aimant (20) possédant un noyau mobile (23) fixé à son extrémité libre à un coin du cadre (6a) du dit réflecteur (6), ledit électro-aimant (20), quand il est alimenté en courant, étant capable d'amener ledit réflecteur dans ladite seconde position limite, et un ressort s'opposant a lui (32) engendrant une force de rappel servant à ramener ledit réflecteur (6) dans ladite première position limite en l'absence d'alimentation en courant du dit électro-aimant.

15. Phare selon la revendication 14, caractérisé en ce que ledit électro-aimant (20) est inséré entre ledit réflecteur (6) et les moyens (55, 56) de réglage vertical du dit réflecteur (6), des joints à rotule (57) étant insérés entre lesdits moyens de réglage vertical (55, 56) et ledit électro-aimant (20), de même qu'entre ledit électro-aimant et ledit réflecteur (6).
